# EUROPEAN PATENT SPECIFICATION

(11) **EP 0 531 751 B1**
(45) Date of publication and mention of the grant of the patent: **04.06.1997**
(21) Application number: 92114006.7
(22) Date of filing: 17.08.1992
(51) Int. Cl.: G11B 15/665, G11B 15/61, G11B 23/087

(54) **Magnetic recording/reproducing device**
Magnetisches Aufzeichnungs-/Wiedergabegerät
Dispositif d'enregistrement et de reproduction magnétique

(30) Priority: 13.09.1991 JP 234418/91
(43) Date of publication of application: 17.03.1993
(73) Proprietor: HITACHI, LTD., Chiyoda-ku, Tokyo 100 (JP)
(72) Inventor: Takeda, Hidekazu, Fujisawa-shi (JP); Kaku, Nobuyuki, Naka-gun, Kanagawa-ken (JP); Nagai, Kyuichiro, Fujisawa-shi (JP); Ichikawa, Hisashi, Katsuta-shi (JP); Nishida, Ikuo, Katsuta-shi (JP); Maruyama, Akira, Katsuta-shi (JP); Iyota, Koji, Katsuta-shi (JP)
(74) Representative: Altenburg, Udo, Dipl.-Phys.

(56) References cited:
- EP-A- 0 180 489
- EP-A- 0 247 442
- FR-A- 2 458 127
- GB-A- 2 200 239
- PATENT ABSTRACTS OF JAPAN vol. 9, no. 129 (P-361)(1852) 5 June 1985
- PATENT ABSTRACTS OF JAPAN vol. 14, no. 240 (P-1051)22 May 1990
- PATENT ABSTRACTS OF JAPAN vol. 6, no. 168 (P-139)2 September 1982

## Description

### BACKGROUND OF THE INVENTION

This invention relates to a mangtic recording/reproducing device according to the preamble of claim 1.

A VTR with an integral camera (particularly, an 8 mm VTR) among cassette-type magnetic recording/ reproducing devices (VTR) has now been required to be more compact mainly because of its portability. A tape drive mechanism occupies a large space in the VTR, and one method of achieving a compact design of the VTR is to reduce this space.

One method of making a tape drive mechanism compact is disclosed, for example, in Japanese Patent Unexamined Publication No. 63-188852, in which utilizing features of an 8 mm VTR, part of a cylinder is received in an open portion of a cassette to reduce the depth of the mechanism, thereby decreasing the plane area of the mechanism. In this case, in order to make the amount of reception of the cylinder as large as possible and also to make the mechanism thin, it is advisable to incline the cylinder toward the cassette. As a result, a tape path forms a three-dimensional loading arrangement having a raised inlet side and a lowered outlet side.

Recently, in addition to the compact construction, a high-performance design (particularly, a low-jitter design for VTR) has been required, and therefore a large-size impedance roller is mounted for the purpose of restraining a vertical vibration of the tape in the complicated tape path.

In the above prior art, because the arrangement of the cylinder is limited, the tape path and the loading mechanism are complicated. When it is intended to reduce the winding of the tape around a fixed guide in order to prevent damage to the tape during the tape loading and also to achieve a low-tension arrangement, a relatively long tape span is required. Therefore, the tape guides are arranged in the direction of the depth of the cylinder or in a direction laterally of the cylinder in such a manner that these tape guides will not interfere with the cylinder and the cassette (cassette lid), and as a result the projected area of the tape path is increased. Furthermore, the loading mechanism is located in the direction of the thickness of the mechanism, and this has been an obstacle to the extremely compact and thin design.

In order to achieve a low-jitter design, an impedance roller is provided in the tape path. In this case, when the impedance roller is so arranged as not to interfere with the cassette and the cassette lid, and is so positioned as not to increase the projected area of the tape path, the outer diameter of the impedance roller can not be increased, so that the performance can not be satisfactorily improved by the inertia effect.

A rotating magnetic head device in magnetic recording and reproducing apparatus is disclosed in European Patent Application No. EP-A-247442.
In this apparatus a cylinder is composed of an upper fixed cylinder and a lower fixed cylinder. A recess is provided in the part of the upper fixed cylinder where a magnetic tape is not wound, and an inner lid, a top case or the like of the tape cassette is arranged in the recess in overlapping fashion.

It is an object of this invention to provide a magnetic recording/reproducing device with an extremely compact and thin design.

This object is achieved with a magnetic recording/reproducing design according to claim 1.

According to the present invention, there is provided a magnetic recording/reproducing device using a tape cassette which has a first protective lid facing a recording side of a magnetic tape received in a wound manner in the cassette, a second protective lid facing a non-recording side of the tape. When the tape cassette is loaded into the device, the first and second protective lids are moved to form a space defined by them. Part of the tape guide (for example, a weight portion of an impedance roller and other mechanism part) is received in this space.

Thus, part of the tape guide which is disposed near the inlet side of the cylinder (for example, the weight portion provided on the upper end of the impedance roller) is received in the dead space formed as a result of opening the protective lids of the cassette. By doing so, a low-jitter design is achieved without increasing the projected area of the tape path, and also the cassette and the mechanism can overlap each other to an utmost limit level. Thus, the compact design of the mechanism is compatible with a high performance.

Further, the first protective lid can be urged away from the cylinder by a mechanism part (e.g. a cassette holder) disposed in the above dead space, and therefore variations in the angle of opening of the protective lid can be absorbed, and when the cylinder is received in the open portion of the cassette, a clearance between the protective lid and the cylinder can be kept to a minimum, and therefore the mechanism can be extremely compact and thin.

### BRIEF DESCRIPTION OF THE DRAWINGS

Fig. 1 is a plan view of one preferred embodiment of a magnetic recording/reproducing device of the present invention;
Fig. 2 is a partly cross-sectional view showing tape protective lids of a tape cassette in an unloaded condition;
Fig. 3 is a cross-sectional view taken along the line III-III of Fig. 1;
Fig. 4 is a rear view as seen in a direction of arrow D of Fig. 1;
Fig. 5 is a cross-sectional view showing a guide roller; and
Fig. 6 is a partly cross-sectional, side-elevational view of the tape cassette, showing the positional relation between the guide roller and the tape protective lids.

### DETAILED DESCRIPTION OF THE PREFERRED EMBODIMENT

A preferred embodiment of the present invention will now be described with reference to the drawings.

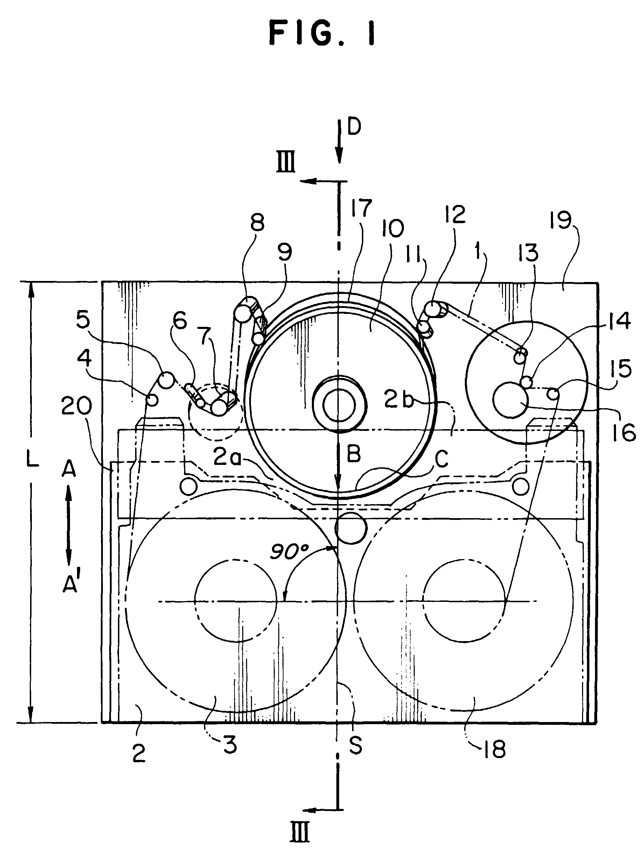

Fig. 1 is a plan view of one preferred embodiment of a magnetic recording/reproducing device of the present invention, and in this embodiment the magnetic recording/reproducing device is an 8 mm video tape recorder. In Fig. 1, reference numeral 1 denotes a magnetic tape, reference numeral 2 a tape cassette, reference numeral 2a an open space, reference numeral 2b a first tape protective lid, reference numeral 3 a tape supply reel, reference numeral 4 a tension pin, reference numeral 5 a first guide roller, reference numeral 6 a first inclined pin, reference numeral 7 a second guide roller, reference numeral 8 a third guide roller, reference numeral 9 a second inclined pin, reference numeral 10 a cylinder drum, reference numeral 11 a third inclined pin, reference numeral 12 a fourth guide roller, reference numeral 13 a fourth inclined pin, reference numeral 14 a capstan, reference numeral 15 a fixed guide, reference numeral 16 a pinch roller, reference numeral 17 a magnetic head, reference numeral 18 a take-up reel, reference numeral 19 a main chassis, and reference numeral 20 a movable chassis. In this embodiment, in order to reduce the depth L of the mechanism, the cylinder drum 10 and the tape cassette 2 can overlap each other in a generally planar manner, and with this arrangement, the mechanism is made compact in a tape loading-completed condition.

In Fig. 1, the cylinder drum 10 is fixed to the main chassis 19 through a cylinder holder member (not shown). The movable chassis 20 is mounted on the main chassis 19 so as to move a predetermined distance in directions of arrows A and A'. When the tape cassette 2 is not loaded, the movable chassis 20 is located in a limit position remotest from the cylinder drum 10 in the direction of arrow A'.

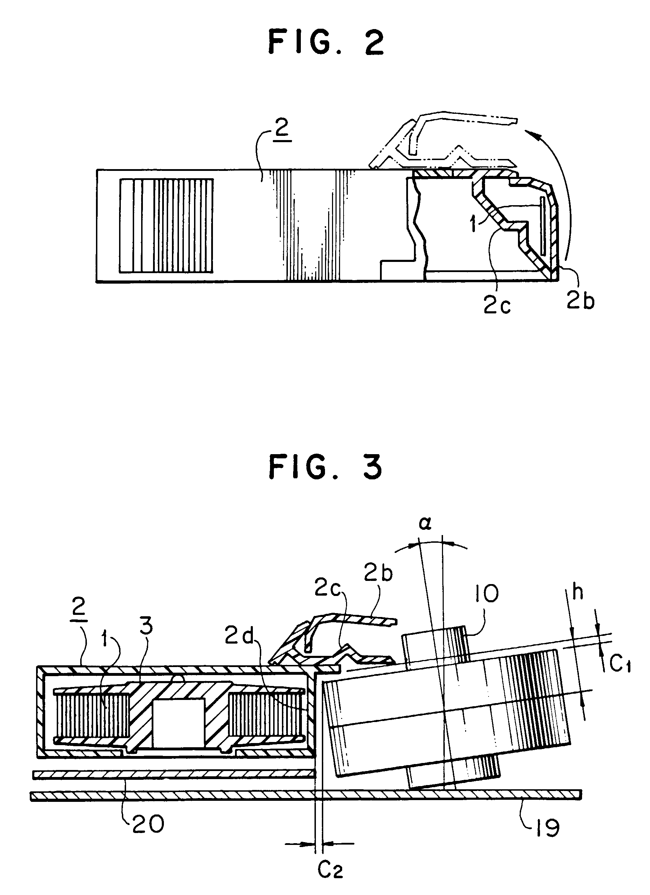

Fig. 2 is a partly cross-sectional, side-elevational view of the 8 mm video tape cassette 2 in an unloaded condition. The magnetic tape 1 is interposed between the first tape protective lid 2b and a second tape protective lid 2c, a recording side of the magnetic tape 1 facing the first tape protective lid 2b whereas a non-recording side of the tape 1 faces the second tape protective lid 2c. When the tape cassette 2 is loaded into the device, the first and second tape protective lids 2b and 2c are moved along a path (indicated by an arrow) by an external force, and is finally brought into an open condition indicated in broken lines. As a result, the open space 2a shown in Fig. 1 is exposed.

When the tape cassette 2 is inserted into a cassette insertion port (not shown), the tape cassette 2 is placed on the movable chassis 20 with the first tape protective lid 2b opened, and the movable chassis 20 is moved in the direction of arrow A, so that part of the cylinder drum 10 is received in the open space 2a exposed as a result of opening of the first tape protective lid 2b. At this time, the tape cassette 2 is located at a limit position closest to the cylinder drum 10. In this embodiment, in order that the cylinder drum 10 and the tape cassette 2 can overlap each other a maximum amount, the axis of rotation of each magnetic head 17 mounted on the cylinder drum 10 is inclined a predetermined angle in a direction (that is, direction of arrow B) perpendicularly intersecting a line passing through the centers of supply reel 3 and the take-up real 18.

In coordinate relation to the above movement, the tension pin 4, the guide rollers 5 and 8 and the inclined pin 9 (which are located near the supply reel 3) disposed in the cassette open space 2a, as well as the inclined pins 11 and 13, the guide roller 12, the fixed guide 15 and the pinch roller 16 (which are located near the take-up reel 18) disposed in the cassette open space 2a, are moved out of the cassette open space 2a, so that the magnetic tape 1 is drawn from the tape cassette 2 and is wound on the cylinder drum 10, and further the guide roller 7 and the inclined pin 6 move into contact with the magnetized surface of the tape, thereby forming a final tape path. Thus, a so-called tape loading is carried out.

Fig. 1 shows the tape loading-completed condition in which the magnetic tape 1 is spirally wound on the cylinder drum 10 through a predetermined angle. In the tape loading-completed condition, the tape path as shown in Fig. 1 is formed, and at the time of the recording or the reproduction, the magnetic tape 1 is held between the capstan 14 and the pinch roller 16, and the rotation of the capstan 14 drives the magnetic tape 1 to transfer. At this time, a plurality of magnetic heads 17 mounted on the cylinder drum 10 scan the magnetic tape 1 to write or read signals. Incidentally, when the tape loading is completed, the tension pin 4, the guide rollers 5 and 7 and the inclined pin 6 are located closer to the tape cassette 2 than the guide roller 8 and the inclined pin 9 (which are disposed near the tape inlet side of the cylinder drum 10), as shown in Fig. 1. Similarly, the inclined pin 13, the capstan 14, the fixed guide 15 and the pinch roller 16 are located closer to the tape cassette 2 than the inclined pin 11 and the guide roller 12 (which are disposed near the tape outlet side of the cylinder drum 10). The tension of the magnetic tape 1 is detected by the tension pin 4, and in accordance with this detection result, a brake (not shown) for a supply reel base is controlled to keep the tension of the magnetic tape 1 constant.

Fig. 3 is a cross-sectional view taken along the line III-III of Fig. 1. As shown in this Figure, the cylinder drum 10 is inclined a predetermined angle toward the tape cassette 2 in such a manner that predetermined clearances Cl and C2 are maintained between the cylinder drum 10 and the second tape protective lid 2c of the tape cassette 2 and between the cylinder drum 10 and an inner wall 2d of the opening, respectively. By inclining the cylinder drum 10 in this direction, the cylinder drum 10 can be mounted at a higher position, and this enables a thin design of the mechanism.

In this embodiment, the clearance C2 between the inner wall 2d of the opening of the tape cassette 2 and the cylinder drum 10 is kept to an allowable minimum amount, as shown in Fig. 3. With this arrangement, the cylinder drum 10 can be disposed the closest to the loaded tape cassette 2, thereby reducing the depth L (Fig. 1) of the mechanism. In addition, as shown in Fig. 1, the extent of winding of the magnetic tape 1 on the cylinder drum 10 is symmetrical with respect to the plane III-III. With this arrangement, the tape guides (the guide rollers 8, 12 and the inclined pins 9 and 11), which are disposed near the cylinder drum 10 when the tape loading is completed, are prevented from being disposed beyond the cylinder drum 10 in the direction of the depth of the mechanism, thereby preventing the depth L of the mechanism from being increased.

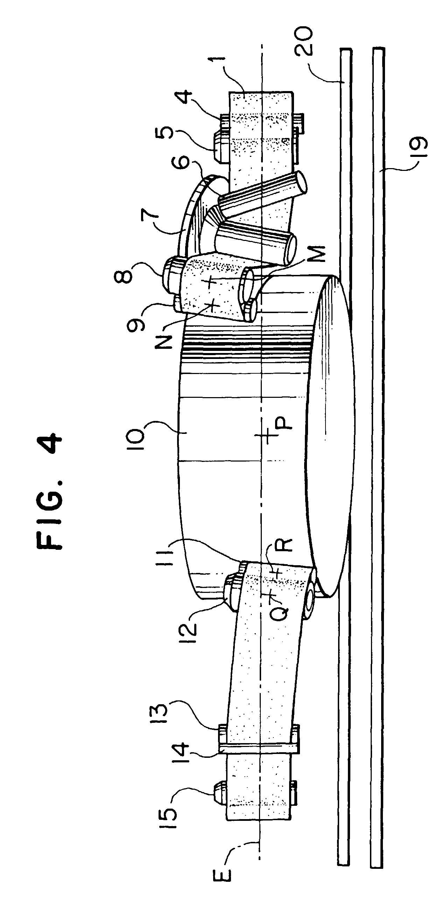

Fig. 4 is a rear view as seen in a direction of arrow D of Fig. 1. In Fig. 4, a dot-and-dash line E represents a centerline (hereinafter referred to as "tape reference centerline") of the magnetic tape 1 within the tape cassette 2 (Fig. 1). In the tape loading-completed condition, the magnetic tape 1 is raised with respect to the tape reference centerline E by the inclined pins 6 and 9 and the guide rollers 7 and 8 at the tape inlet side of the cylinder drum 10. In the range of winding of the magnetic tape 1 on the cylinder drum 1, the centerline of the magnetic tape 1 goes down to the lower side of the tape reference centerline E. At the tape outlet side of the cylinder drum 10, the magnetic tape 1 is raised by the inclined pins 11 and 13 and the guide roller 12 in such a manner that its centerline coincides with the tape reference centerline E.

Thus, in this embodiment, the three-dimensional M-loading is adopted, and the guide roller 8 and the inclined pin 9 are projected the highest, but do not project upwardly beyond the cylinder drum 10 and the first tape protective lid 2b of the tape cassette 2 (Figs. 2 and 3). The lower end of the mechanism is determined by the position of an urging device (not shown) for determining the position of the downwardly-projecting inclined pin 11 and guide roller 12. In order to achieve the thin design of the mechanism, the angle of inclination of the cylinder drum 10 is so determined that the urging device for the inclined pin 11 and the guide roller 12 can be located as high as possible.

In Fig. 4, a center point of the rotation of the magnetic head 17 is designated at P, the widthwise center point of the magnetic tape 1 on the guide roller 8 is designated at M, the widthwise center point of the magnetic tape 1 on the inclined pin 9 is designated at N, the widthwise center point of the magnetic tape 1 on the guide roller 12 is designated at Q, and the width-wise center point of the magnetic tape 1 on the inclined pin 11 is designated at R. In connection with the inclined posture of the cylinder drum 10 according to the present invention, as regards the heights of these center points M, N, P, Q and R with respect to the tape reference centerline E, the center point M is the highest, and the center point N is the second highest. The center point P is slightly lower than the centerline E, and the center point Q is lower than the center point P, and the center pint R is lower than the center point Q.

The guide roller 7 is an impedance roller provided for the purpose of achieving a low-jitter design.

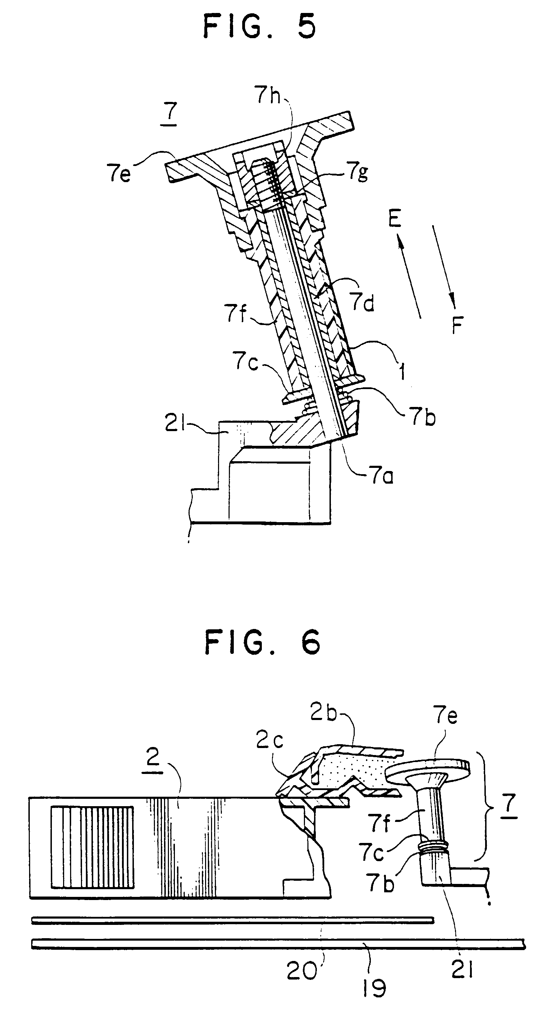

Fig. 5 is a cross-sectional view of the guide roller 7. A shaft 7a is mounted on an arm 21 pivotally mounted on the main chassis 19, and is inclined at a predetermined angle in a predetermined direction. Reference numeral 7b denotes a conical compression spring, reference numeral 7c a tape lower edge-limiting flange, and reference numeral 7d a sleeve. A weight 7e is press-fitted on a plastic roller 7f, and is rotatable, together with the plastic roller 7f, about the sleeve 7d. Reference numeral 7g denotes a spacer, and reference numeral 7h denotes a retainer for the sleeve 7d and the roller 7f, the retainer 7h being connected to a threaded portion of the shaft 7a. In this construction, the flange 7c and the sleeve 7d are urged in a direction of arrow E by the spring 7b, and can be moved in directions of arrows E and F, depending on the position of the retainer 7h, and the roller 7f and the weight 7e can also be moved in accordance with the movement of the flange 7c. In order to efficiently produce a moment of inertia, the weight 7e is greater in outer diameter than the plastic roller 7f (with which the magnetic tape 1 is in contact), and is made of a material having a greater specific gravity. In the case where the weight 7e is in the form of a disk, the moment of inertia is proportional to the square of the diameter, and therefore to make the outer diameter as large as possible is effective for the low-jitter design.

Fig. 6 is a partly cross-sectional, side-elevational view of the tape cassette 2 in the tape loading-completed condition, showing the arrangement of the guide roller 7 and the first and second tape protective lids 2b and 2c.

Part of the weight 7e of the guide roller 7 is received in a dead space (indicated by a dotted portion) defined by the tape protective lids 2b and 2c. With this arrangement, the outer diameter of the weight 7e can be made larger, thereby increasing the moment of inertia of the guide roller 7.

As described above, in the present invention, part of the weight of the impedance roller is received in the dead space formed as a result of moving the tape protective lids. By doing so, without affecting the moment of inertia of the impedance roller, the projected area of the tape path can be reduced, and the mechanism can be extremely compact, and the low-jitter design can be achieved. Thus, there can be provided the magnetic recording/reproducing device which is compact and has a high performance.

In the above embodiment, although part of the tape guide (impedance roller) is received in the dead space formed by the tape protective lids, the member to be received is not limited to the tape guide. For example, a component part of the mechanism, such as a cassette holder, may be received in so far as the cassette and the mechanism (including the cylinder) can overlap each other to an utmost-limit extent. In this case, no limitation is imposed on the condition of receiving of the component part in the dead space.

As is clear from the foregoing description, in the magnetic recording/reproducing device according to the present invention, part of the tape guide or the constituent member of the mechanism is received in the dead space formed as the result of moving the tape protective lids. With this arrangement, the tape cassette and the mechanism (including the cylinder) can overlap each other to the utmost-limit extent, and therefore the tape drive mechanism and hence the overall construction of the device can be compact and thin, thereby providing an enhanced portability.

The present invention can be practiced in other forms than the above embodiment without departing from the main features of the invention. Therefore, the above embodiment is merely one example of the present invention, and is not to be construed as being limitative. The present invention is defined by the appended claims. Various modifications and changes can be made without departing from the present invention.

## Claims

1. A magnetic recording/reproducing device of a helical scan type, comprising a drum (10) for winding a magnetic tape (1) thereon and magnetic heads for writing and reading signals relative to the magnetic tape wound on said drum,
a cassette (2) having a pair of tape reels therein on which the magnetic tape (1) is wound and received, said cassette having a first protective lid (2b) disposed at a recording side of said magnetic tape, and a second protective lid (2c) disposed at a non-recording side of said magnetic tape,
a space being defined between said first and second protective lids and formed as a result of the opening of said first and second protective lids of said cassette,
a tape travel guide (7) for guiding the travel of the magnetic tape drawn out of said cassette and loaded on said drum, said tape travel guide being of a rotation type in which a guide portion in contact with the magnetic tape is rotated, said tape travel guide being provided with a first rotatable portion (7f) with which said magnetic tape is in contact, characterized in that
said tape travel guide further is provided with
a second rotatable portion (7e) greater in diameter than said first rotatable portion, wherein, when said magnetic tape is loaded, at least a part of said second rotatable portion is received in said space.

2. A magnetic recording/reproducing device according to claim 1, in which said drum is inclined in a direction perpendicularly intersecting a line passing through the centers of said pair of tape reels in said cassette.

3. A magnetic recording/reproducing device according to claim 1, in which a center point (P) of the rotation of said magnetic heads mounted on said drum is lower than a center plane (E) of a width of said magnetic tape within said cassette.

4. A magnetic recording/reproducing device according to claims 1 and 3, further comprising a first tape height adjustable guide (8) in the vicinity of a tape inlet side of said drum and a second tape height adjustable guide (12) in the vicinity of a tape outlet side of said drum, in which a center point (M) of a width of said magnetic tape wound on said first tape height adjustable guide (8) is higher than said center plane (E) and a center point (Q) of a width of said magnetic tape wound on said second tape height adjustable guide (12) is lower than said center plane (E).

5. A magnetic recording/reproducing device according to claim 1, in which a tape path is made convex toward said cassette by said tape travel guide (7).

6. A magnetic recording/reproducing device according to claim 1, in which said first and second rotatable portions of said tape travel guide are adjustable in height in a direction of the rotation axis of said guide.

## Patentansprüche

1. Magnetische Aufzeichnungs-/Wiedergabevorrichtung eines spirallinigen Abtasttyps, der eine Trommel (10) zum Aufspannen eines Magnetbandes (1) darauf sowie Magnetköpfe zum Schreiben und Lesen von Signalen aufweist, die sich auf das auf der Trommel aufgespannte Magnetband beziehen;
eine Kassette (2), die ein Paar von Bandspulen darin aufweist, auf denen das Magnetband (1) aufgespannt und aufgenommen wird, wobei die Kassette einen ersten Schutzdeckel (2b), der an einer Aufnahmeseite des Magnetbandes angeordnet ist, und einen zweiten Schutzdeckel (2c) aufweist. der an einer nicht aufnehmenden Seite des Magnetbandes angeordnet ist;
einen Raum, der zwischen dem ersten und dem zweiten Schutzdeckel definiert und als Ergebnis des Öffnens des ersten und zweiten Schutzdeckels der Kassette gebildet wird;
eine Bandlaufführung (7) zum Führen des Laufs des aus der Kassette gezogenen und auf die genannte Trommel aufgespannten Magnetbandes, wobei die Bandlaufführung ein Rotationstyp ist, bei dem ein Führungsabschnitt in Berührung mit dem Magnetband in Drehung versetzt wird, wobei die Bandlaufführung mit einem ersten drehbaren Teil (7f) versehen ist, mit welchem das Magnetband in Berührung steht, dadurch gekennzeichnet, daß
die Magnetbandführung weiter mit einem zweiten drehbaren Teil (7e) versehen ist, der im Durchmesser größer als das genannte erste drehbare Teil ist, und wobei, wenn das Magnetband geladen wird, mindestens ein Teil des zweiten drehbaren Teils in dem genannten Raum aufgenommen wird.

2. Magnetische Aufzeichnungs-/Wiedergabevorrichtung nach Anspruch 1, bei der die Trommel in eine Richtung geneigt ist, die senkrecht eine Linie schneidet, welche durch die Mitten des Bandspulenpaares in der Kassette hindurchgeht.

3. Magnetische Aufzeichnungs-/Wiedergabevorrichtung nach Anspruch 1, bei der ein Mittelpunkt (P) der Umdrehung der auf der Trommel montierten genannten Magnetköpfe niedriger als eine Mittelebene (E) einer Breite des Magnetbandes innerhalb der Kassette liegt.

4. Magnetische Aufzeichnungs-/Wiedergabevorrichtung nach den Ansprüchen 1 und 3, die eine erste bandhöheneinstellbare Führung (8) in der Nähe der Bandeinlaßseite der Trommel sowie eine zweite bandhöheneinstellbare Führung (12) in der Nähe der Bandauslaßseite der Trommel aufweist, bei der ein Mittelpunkt (M) einer Breite des Magnetbandes, das auf der ersten bandhöheneinstellbaren Führung (8) aufgespannt ist, höher als die genannte Mittenebene (E) liegt, und bei der Mittelpunkt (Q) einer Breite des Magnetbandes, das auf der zweiten bandhöheneinstellbaren Führung (12) aufgespannt ist, niedriger als die genannte Mittenebene (E) liegt.

5. Magnetische Aufzeichnungs-/Wiedergabevorrichtung nach Anspruch 1, bei der ein Bandpfad durch die Bandlaufführung (7) konvex in Richtung auf die Kassette ausgebildet ist.

6. Magnetische Aufzeichnungs-/Wiedergabevorrichtung nach Anspruch 1, bei der das erste und das zweite drehbare Teil der Bandlaufführung höhenmäßig in einer Richtung der Umdrehungsachse der Führung einstellbar sind.

## Revendications

1. Dispositif d'enregistrement/reproduction magnétique du type à balayage hélicoïdal, constitué d'un tambour (10) destiné à l'enroulement d'une bande magnétique (1) sur celui-ci et de têtes magnétiques destinées à l'écriture et la lecture de signaux par rapport à la bande magnétique enroulée sur ledit tambour,
une cassette (2) comportant deux bobines à bande dans celle-ci sur lesquelles la bande magnétique (1) est enroulée et est reçue, ladite cassette ayant un premier couvercle protecteur (2b) disposé au niveau d'un côté enregistrement de ladite bande magnétique, et un second couvercle protecteur (2c) disposé au niveau d'un côté non-enregistrement de ladite bande magnétique,
un espace étant défini entre lesdits premier et second couvercles protecteurs et formé du fait de l'ouverture desdits premier et second couvercles protecteurs de ladite cassette,
un élément de guidage de bande (7) destiné à guider la bande magnétique extraite de ladite cassette et chargée sur ledit tambour, ledit élément de guidage de bande étant du type rotatif dans lequel une partie de guidage située en contact avec la bande magnétique est entraînée en rotation, ledit élément de guidage de bande étant muni d'une première partie rotative (7f) avec laquelle est en contact ladite bande magnétique, caractérisé en ce que
ledit élément de guidage de bande comporte en outre
une seconde partie rotative (7e) dont le diamètre est supérieur à celui de ladite première partie rotative, au moins une partie de ladite seconde partie rotative étant reçue dans ledit espace lorsque ladite bande magnétique est chargée.

2. Dispositif d'enregistrement/reproduction magnétique selon la revendication 1, dans lequel ledit tambour est incliné dans une direction recoupant perpendiculairement une ligne passant par les centres des bobines desdites deux bobines à bande situées dans ladite cassette.

3. Dispositif d'enregistrement/reproduction magnétique selon la revendication 1, dans lequel le centre (P) de la rotation desdites têtes magnétiques montées sur ledit tambour est situé au-dessous d'un plan central (E), la distance entre eux étant égale à la largeur de ladite bande magnétique à l'intérieur de ladite cassette.

4. Dispositif d'enregistrement/reproduction magnétique selon les revendications 1 et 3, comportant en outre un premier élément de guidage de bande réglable en hauteur (8) situé près du côté dudit tambour où arrive la bande et un second élément de guidage de bande réglable en hauteur (12) situé près du côté dudit tambour où sort la bande, dans lequel le milieu (M) de la largeur de ladite bande magnétique enroulée sur ledit premier élément de guidage de bande réglable en hauteur (8) est situé au-dessus dudit plan central (E) et le milieu (Q) de la largeur de ladite bande magnétique enroulée sur ledit second élément de guidage de bande réglable en hauteur (12) est situé au-dessous dudit plan central (E).

5. Dispositif d'enregistrement/reproduction magnétique selon la revendication 1, dans lequel le trajet suivi par la bande est rendu convexe dans la direction de ladite cassette par ledit élément de guidage de bande (7).

6. Dispositif d'enregistrement/reproduction magnétique selon la revendication 1, dans lequel lesdites première et seconde parties rotatives dudit élément de guidage de bande sont réglables en hauteur dans la direction de l'axe de rotation dudit élément de guidage.
